# EUROPEAN PATENT SPECIFICATION

(11) **EP 3 993 484 B1**
(45) Date of publication and mention of the grant of the patent: **13.08.2025**
(21) Application number: 20868846.5
(22) Date of filing: 01.09.2020
(51) Int. Cl.: H04W 24/02, H04L 12/28, H04L 41/0806, H04L 41/08, H04W 84/12

(54) **METHOD AND DEVICE FOR AUTOMATIC ROLE ASSUMPTION, AND COMPUTER READABLE STORAGE MEDIUM**
VERFAHREN UND VORRICHTUNG ZUR AUTOMATISCHEN ROLLENÜBERNAHME UND COMPUTERLESBARES SPEICHERMEDIUM
PROCÉDÉ ET DISPOSITIF DE PRISE EN CHARGE AUTOMATIQUE DE RÔLE, ET SUPPORT DE STOCKAGE LISIBLE PAR ORDINATEUR

(30) Priority: 23.09.2019 CN 201910901553
(43) Date of publication of application: 04.05.2022
(73) Proprietor: ZTE Corporation, Shenzhen, Guangdong 518057 (CN)
(72) Inventor: YANG, Zhaolei, Shenzhen, Guangdong 518057 (CN)
(74) Representative: WBH Wachenhausen Patentanwälte PartG mbB
(86) International application number: PCT/CN2020/112906
(87) International publication number: WO 2021/057413

(56) References cited:
- WO-A1-2015/192465
- WO-A1-2018/118150
- WO-A1-2020/066611
- CN-A- 101 557 616
- CN-A- 105 307 197
- CN-A- 106 331 175
- CN-A- 107 949 005
- US-A1- 2016 360 407
- US-A1- 2018 054 845
- US-A1- 2018 278 625
- ANONYMOUS: "Wi-Fi CERTIFIED EasyMesh Highlights. Smarter, consistent residential Wi-Fi® coverage", WI-FI ALLIANCE, 12 May 2018 (2018-05-12), XP055700068, Retrieved from the Internet <URL:https://www.wi-fi.org/download.php?file=/sites/default/files/private/Wi-Fi_CERTIFIED_EasyMesh_Highlights.pdf> [retrieved on 20200602]

## Description

### TECHNICAL FIELD

The embodiments of the present invention relate to, but are not limited to, a multi-access point (AP) network, in particular to a method, a device and a computer-readable storage medium for self-election of a role.

### BACKGROUND

With the development of the home wireless network, multi-Access Point (AP) are frequently used to extend wireless network coverage.

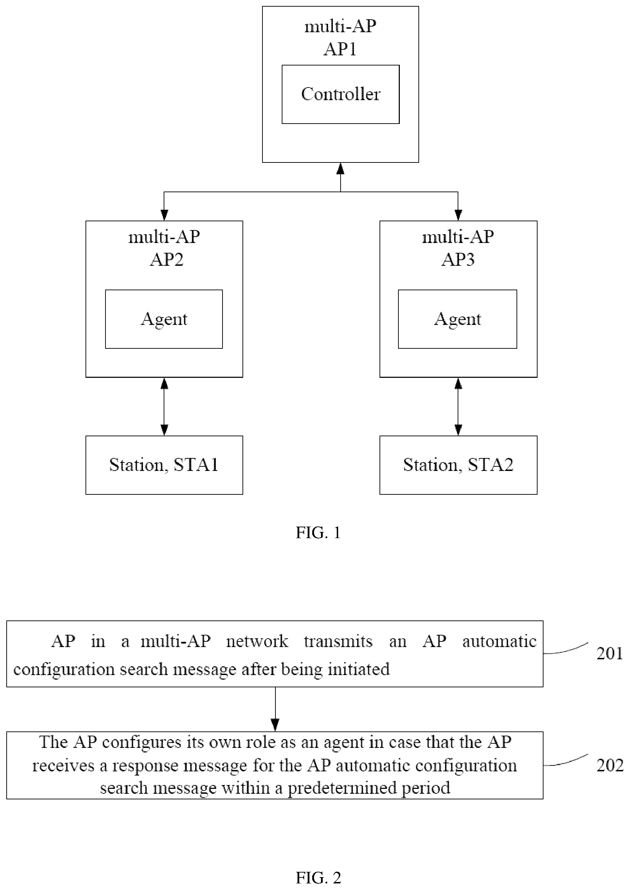

In a home gateway multi-AP networking, a device has two roles, one is the controller, which serves as a control terminal device, and the other is an agent, which serves as a client. As shown in FIG. 1, the controller is the logical control unit of the whole networking, which serves to control the front-end network and back-end link in multi-AP networking, for example, to collect capability data of an AP and a station (STA) in the networking, to control roaming strategy, and to synchronize wireless configuration distribution with the agents, or the like. There is only one controller in one network. Because the controller is the main body for network control, it is generally desired that the controller be located in the network. Agent, is a logical entity of multi-AP networking, which mainly receives multi-AP instructions and performs corresponding operations, including receiving configuration synchronization instructions from the controller. In FIG. 1, as an example, only two agents AP2 and AP3, and two STAs are shown. However, in actual networking, there can be one or more agents in a network.

Generally, a role of an AP in a multi-AP network is manually configured by a user. For example, the user may configure the role as the controller or as an agent through a Website User Interface (WebUI) or a mobile application (APP). Therefore, the efficiency of multi-AP networking is relatively low.

Patent literature WO2015192465A1 discloses a wireless configuration synchronization method, the method comprising: receiving by a wireless router an automatic configuration message sent by an access point (AP), the automatic configuration message being used for requesting the type of wireless parameter to be configured for the AP; obtaining by the requesting AP a parameter value corresponding to the wireless parameter type, and sending a message carrying the parameter value to the AP to achieve configuration synchronization between the wireless router and the AP. Also provided are a wireless router and an AP implementing the method.

While the above publication may achieve its intended purpose, there is still a need for a new and improved method and device for self-election of a role in multi-access point (AP) network.

### SUMMARY

The invention is set out in the appended claims.

In view of this, an embodiment of the present invention provides a method for self-election of a role, which is performed in a multi-access point (AP) network, and includes, transmitting an AP automatic configuration search message, by an AP in the multi-AP network, after the AP is initiated; configuring a role of the AP as an agent, by the AP, in response to a response message for the AP automatic configuration search message being received by the AP within a predetermined period; and configuring a role of the AP as a controller, by the AP, in response to the response message for the AP automatic configuration search message being not received by the AP within the predetermined period; in which, the AP automatic configuration search message includes an AP autoconfig search message in 1905 protocol, and the AP autoconfig search message is a layer 2 multicast message.

An embodiment of the present invention further provides a device for self-election of a role, which is deployed in an AP in a multi-AP network, and includes, a memory, a processor, and a computer program stored in the memory and executable by the processor, which when executed by the processor, causes the processor to carry out the method for self-election of a role as described above.

An embodiment of the present invention further provides a computer-readable storage medium, storing an information processing program thereon, which when executed by a processor associated with an AP, causes the AP to carry out the method for self-election of a role as described above.

Other features and advantages of the present invention will be illustrated in the following description, and in part will be apparent from the description, or may be understood by practicing the present invention. The objects and other advantages of the present invention can be realized and obtained by the structure particularly set forth in the specification, claims and drawings.

### BRIEF DESCRIPTION OF DRAWINGS

The drawings are intended to provide a further understanding of the technical scheme of the present invention, and form a part of the specification, and they are intended to illustrate the technical scheme of the present invention in conjunction with the embodiments of the present invention, but are not intended to limit the technical scheme of the present invention.
FIG. 1 depicts a schematic diagram of a multi-access point (AP) network;
FIG. 2 depicts a flowchart of a method for self-election of a role according to an embodiment of the present invention;
FIG. 3 depicts a flowchart of a method for self-election of a role according to another embodiment of the present invention;
FIG. 4 depicts a schematic diagram of a multi-AP network in an embodiment of the present invention;
FIG. 5 depicts a schematic diagram of a multi-AP network in an embodiment of the present invention;
FIG. 6 depicts a flowchart of a method for self-election of a role according to another embodiment of the present invention;
FIG. 7 depicts a schematic diagram showing components of a device for self-election of a role according to an embodiment of the present invention; and
FIG. 8 depicts a schematic diagram showing components of a device for self-election of a role according to an embodiment of the present invention.

### DETAILED DESCRIPTION

Some embodiments of the present invention will be described with details below with reference to the accompanying drawings in order to illustrate the purpose, technical scheme and advantages of the present invention. It should be noted that the embodiments of the present invention and the features in the embodiments may be freely combined with each other without conflict.

The steps as shown in the flowchart of the drawings can be performed in a computer system such as a set of computer-executable instructions. Furthermore, in some cases, the steps shown or described may be performed in a different order than the logical order shown in the flowcharts.

FIG. 2 depicts a flowchart of a method for self-election of a role according to an embodiment of the present invention. As shown in FIG. 2, the method is performed in a multi-access point (AP) network, and includes the following operations.

In S201, an AP in the multi-AP network transmits an AP automatic configuration search message after being initiated.

In S202, the AP configures its own role as an agent in case that the AP receives a response message for the AP automatic configuration search message within a predetermined period.

The method further includes the following operations.

The AP configures its own role as the controller in case that the AP does not receive a response message for the AP automatic configuration search message within a predetermined period.

The method further includes the following operations.

The AP transmits the access point automatic configuration search message repeatedly in case that the AP does not receive a response message for the AP automatic configuration search message within a predetermined period.

The AP repeatedly transmits the AP automatic configuration search message for no more than a predetermined number of times until the AP receives a response message for the AP automatic configuration search message during the repeated transmission, then the AP configures its role as an agent.

The method further includes the following operations.

The AP performs a determination as to whether or not a device directly connected with the AP's own WAN port is a 1905 device, in case that the AP does not receive a response message for the AP automatic configuration search message that has been transmitted repeatedly for the predetermined number of times.

The AP configures its own role as an agent in response to a determination that the device directly connected to the AP's own WAN port is a 1905 device.

The method further includes the following operations.

The AP configures its own role as the controller in case that the device directly connected to the AP's own WAN port is not a 1905 device.

And the performance of a determination as to whether or not a device directly connected with the AP's own WAN port is a 1905 device, includes the following operations.

The AP performs a determination as to whether or not a topology discovery message is received via the AP's own WAN port.

The AP performs a further determination as to whether or not a device directly connected to the AP's own WAN port is a 1905 device.

The AP determines that, the device directly connected to the AP's own WAN port is not a 1905 device, in response to a determination that, no topology discovery message is received via the AP's own WAN port.

The method further includes the following operations after the AP configures its own role as an agent.

The AP performs a Wi-Fi Simple Configuration (WSC) interaction with the controller device in the multi-AP network, and performs a wireless configuration synchronization.

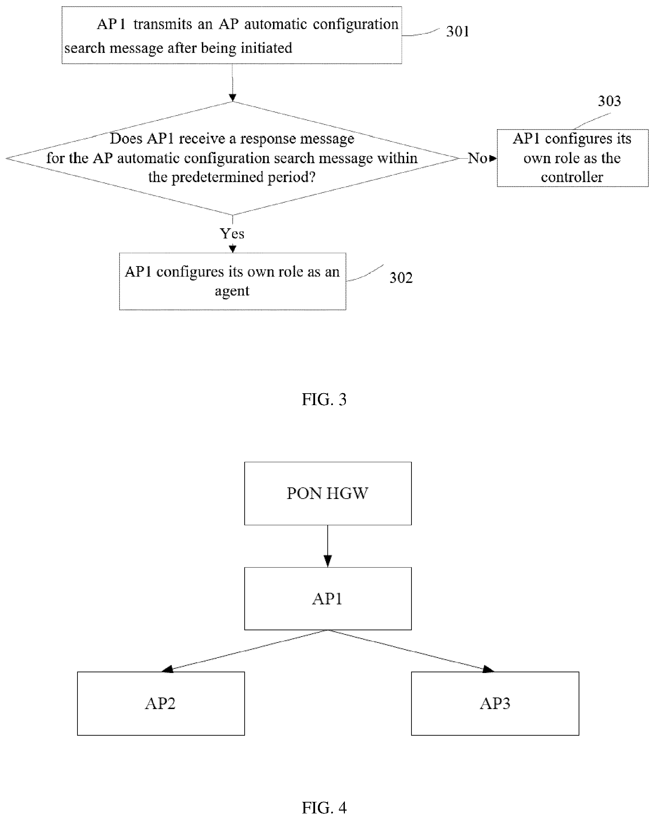

FIG. 3 depicts a flow diagram of a method for self-election of a role according to another embodiment of the present invention.

This embodiment can be applied to the networking of a multi-AP network as shown in FIG. 4. As shown in FIG. 4, AP1 is connected to a Passive Optical Network Home Gateway (PON HGW), and AP2 and AP3 devices are connected to AP1 in a wired or wireless manner.

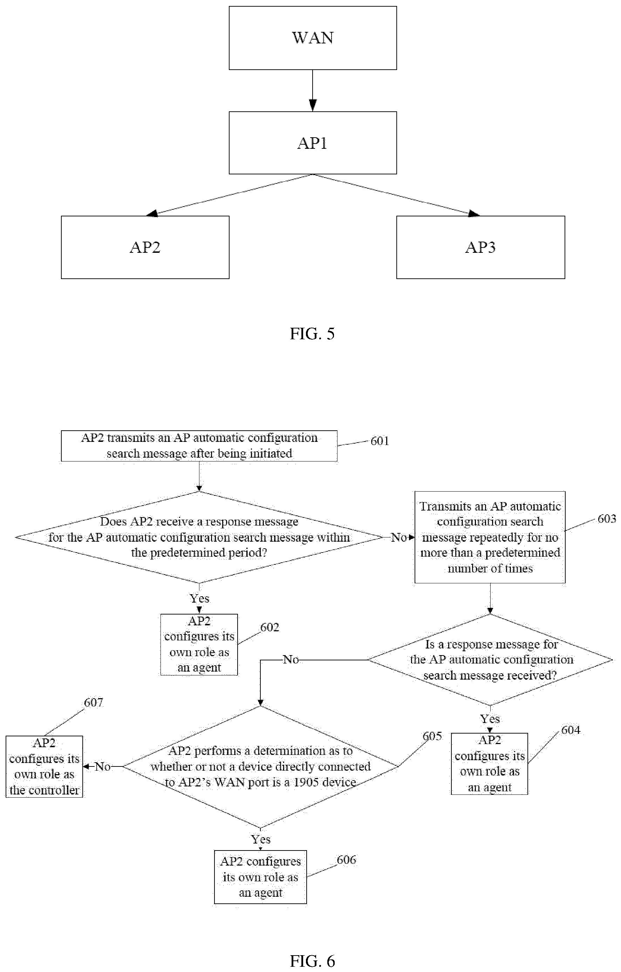

This embodiment can be applied to the networking of a multi-AP network as shown in FIG. 5. As shown in FIG. 5, AP1 is directly connected to an external Wide Area Network(WAN), and AP2 and AP3 devices are connected to AP1 in a wired or wireless manner.

In this embodiment, the technical scheme of this embodiment will be illustrated in detail by way of example in which AP1 serves as the subject for the execution of the method.

As shown in FIG. 3, the method is performed in a multi-access point (AP) network, and includes the following operations.

In S301, AP1 transmits an AP automatic configuration search message after being initiated.

The AP automatic configuration search message can be the AP-autoconfig search message in the existing 1905 protocol, which is a layer 2 multicast message.

Specifically, a controller device, if presented in the multi-AP network, would transmit an AP-autoconfig search response message that is a layer 2 unicast message to AP1, as a response, after receiving the AP-autoconfig search message as transmitted by AP1. However, AP1 would not receive the AP-autoconfig search response message in case that there is no controller device in the multi-AP network. In addition, a predetermined period can be set in advance in order to improve the accuracy, due to the delay of network transmission. Thereby, AP1 can determine whether there is a controller device in the network based on a determination as to whether or not the AP-autoconfig search response message is received within the predetermined period.

S302 in which AP1 configures its own role as an agent, is performed in case that AP1 receives a response message for the AP automatic configuration search message within the predetermined period. And S303 in which AP1 configures its own role as the controller, is performed in case that AP1 does not receive a response message for the AP automatic configuration search message within the predetermined period.

FIG. 6 depicts a flow diagram of a method for self-election of a role according to another embodiment of the present invention.

This embodiment can be applied to the networking of a multi-AP network as shown in FIG. 4. As shown in FIG. 4, AP1 is connected to a Passive Optical Network Home Gateway (PON HGW), and AP2 and AP3 devices are connected to AP1 in a wired or wireless manner.

This embodiment can be applied to networking of a multi-AP network as shown in FIG. 5. As shown in FIG. 5, AP1 is directly connected to an external Wide Area Network (WAN), and AP2 and AP3 devices are connected to AP1 in a wired or wireless manner.

In this embodiment, the technical scheme of this embodiment will be illustrated in detail by way of example in which AP2 serves as the subject for the execution of the method. AP2's Wide Area Network port (WAN port) is connected with the AP1's Local Area Network port (LAN port).

As shown in FIG. 6, the method is performed in a multi-access point (AP) network, and includes the following operations.

In S601, AP2 transmits an AP automatic configuration search message after being initiated.

The AP automatic configuration search message can be the AP-autoconfig search message in the existing 1905 protocol, which is a layer 2 multicast message.

A controller device, if presented in the multi-AP network, would transmit an AP-autoconfig search response message that is a layer 2 unicast message to AP2, as a response, after receiving the AP-autoconfig search message as transmitted by AP2. However, AP2 would not receive the AP-autoconfig search response message in case that there is no controller device in the multi-AP network. In addition, a predetermined period can be set in advance in order to improve the accuracy, due to the delay of network transmission. Thereby, AP2 can determine whether there is a controller device in the network based on a determination as to whether or not an AP-autoconfig search response message is received.

And in order to avoid errors, a predetermined period can be set in advance. The AP-autoconfig search message may be transmitted repeatedly for a predetermined number of times in case that no response is received within the predetermined period. For example, the predetermined period may be 60 seconds (maybe customized), and the AP-autoconfig search message may be transmitted repeatedly for 3 times (maybe customized) in case that no response is received within 60 seconds.

S602 is performed in case that AP2 receives a response message for the AP automatic configuration search message within the predetermined period. And S603 is performed in case that AP2 does not receive a response message for the AP automatic configuration search message within the predetermined period.

In S602, AP2 configures its own role as an agent.

Specifically, device AP2's WAN port is initiated and an AP-autoconfig search message is transmitted. AP2 configures its own role as an agent in case that AP2 receives AP_AUTOCONFIGURATION_RESPONSE message, and the process ends. S603 is performed in case that the AP_AUTOCONFIGURATION_RESPONSE message is not received.

In S603, an AP automatic configuration search message is repeatedly transmitted for no more than a predetermined number of times until a response message for the AP automatic configuration search message is received, then S604 is performed, or S605 is performed in case that no response message for the AP automatic configuration search message is received during the repeated transmission.

For example, AP2 transmits an AP automatic configuration search message, and configures its own role as an agent in case that AP2 receives a response for the AP automatic configuration search message, otherwise, AP2 transmits the AP automatic configuration search message again, and configures its own role as an agent in case that AP2 receives a response for the AP automatic configuration search message, and this procedure repeats. AP2 performs a determination as to whether or not a 1905 device is connected to AP2's WAN port in case that no response is received during the repeated transmission of the AP automatic configuration search message for 3 times. And AP2 configures its own role as an agent in case that a 1905 device is connected to AP2's WAN port, and the process ends, or AP2 configures its own role as the controller in case that no 1905 device is connected to AP2's WAN port.

In S604, AP2 configures its own role as an agent.

In S605, AP2 performs a determination as to whether or not a device directly connected to AP2's WAN port is a 1905 device.

And the performance of a determination as to whether or not a device directly connected with AP2's own WAN port is a 1905 device, includes the following operations.

AP2 performs a determination as to whether or not a topology discovery message is received via the AP's own WAN port.

AP2 performs a further determination as to whether or not a device directly connected to AP2's own WAN port is a 1905 device.

AP2 determines that, the device directly connected to AP2's own WAN port is not a 1905 device, in response to a determination that, the topology discovery message is not received via AP2's own WAN port.

And AP2 configures its own role as an agent in case that an AP-autoconfig search response message is received by AP2, since this indicates that there is already a controller device in this network. Otherwise, AP2 performs a determination as to whether or not a device directly connected to AP2's own WAN port is a 1905 device, if no AP-autoconfig search response message is received with the AP-autoconfig search message transmitted repeatedly for e.g., 3 times (may be customized) within a period of e.g., 60 seconds (maybe customized), since this may indicate that, there is no controller device in the network.

S606 is performed in case that the device is a 1905 device, and this indicates that AP2 is distal to the network exit. And S606 is performed in case that the device is not a 1905 device, and this indicates that AP2 is approximal to the network exit.

In S606, AP2 configures its own role as an agent.

In S607, AP2 configures its role as the controller.

Specifically, a determination as to whether or not the device directly connected to the WAN port is a 1905 device, can be performed based on a discovery message of IEEE 1905.1-2013 protocol. For example, AP2 configures its own role as an agent in case that a TOPOLOGY _DISCOVERY message is received via AP2's initiated WAN port.

And a determination of a 1905 device can be performed based on the topology discovery protocol of IEEE 1905.1. For example, AP2 configures its own role as an agent in case that a Topology discovery message, a Topology query message, a Topology notification message, or the like, is received via AP2's initiated WAN port.

In another embodiment of the present invention, after the role of the AP is configured as an agent by the AP itself, the method includes, in addition to the embodiment as described above, the agent device gets to know a MAC address of the controller device through an AP-autoconfig search response message or a topology discovery message, performs a Wireless Fidelity Simple Configuration (WSC) interaction with the controller device, and performs a wireless configuration synchronization.

By means of the technical scheme according to the above embodiments, an AP device in a multi-AP networking of home gateway (P1905 protocol and multi-AP protocol) performs a self-election of a role through the AP-autoconfiguration of the P1905 protocol, thus reducing manual intervention and improving the installation ability.

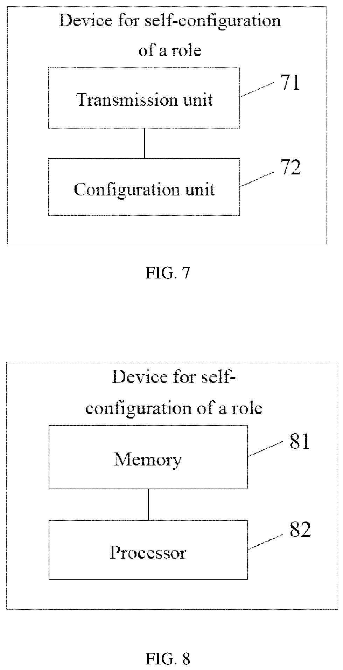

FIG. 7 is a schematic diagram showing components of a device for self-election of a role according to an embodiment of the present invention. As shown in FIG. 7, an AP which is deployed in the multi-access point AP network, includes the following components.

A transmission unit 71, which is configured to transmit an AP automatic configuration search message after the AP is initiated.

And a configuration unit 72, which is configured to configure a role of the AP as an agent in response to a response message for the AP automatic configuration search message being received within a predetermined period.

The configuration unit 72 is further configured to configure a role of the AP as the controller in response to no response message for the AP automatic configuration search message being received within a predetermined period.

And the configuration unit 72 is further configured to instruct the transmission unit 71 to repeatedly transmit the AP automatic configuration search message for no more than a predetermined number of times, in response to no response message for the AP automatic configuration search message being received within a predetermined period by the AP,
until the AP receives a response message for the AP automatic configuration search message, then the AP configures its role as an agent in response to a response message for the AP automatic configuration search message being received.

The configuration unit 72 is further configured to perform a determination as to whether or not a device directly connected to the AP's own WAN port is a 1905 device, in response to no response message being received for the AP automatic configuration search message having been repeatedly transmitted for a predetermined number of times.

And a role of the AP is configured as an agent in response to a determination that the device directly connected to the AP's own WAN port is a 1905 device.

And the configuration unit 72 is further configured to configure a role of the AP as the controller in response to a determination that the device directly connected to AP's own WAN port is not a 1905 device.

And the performance of a determination as to whether or not a device directly connected with AP's own WAN port is a 1905 device, includes the following operations.

A determination as to whether or not a topology discovery message is received via the AP's own WAN port, is performed.

A further determination as to whether or not a device directly connected to AP's own WAN port is a 1905 device, is performed.

It is determined that, the device directly connected to AP's own WAN port is not a 1905 device, in response to a determination that, the topology discovery message is not received via AP's own WAN port.

And the device further includes the following components.

A setting unit, which is configured to perform a WSC interaction with controller device in the multi-AP network after the AP configures its own role as an agent, and performs a wireless configuration synchronization.

Referring to FIG. 8, an embodiment of the present invention further provides a device for self-election of a role, which is deployed in an AP in a multi-AP network, and includes a memory 81, a processor 82, and a computer program stored in the memory 81 and executable by the processor 82, and when the computer program is executed by the processor 82, causes the processor 82 to carry out the method for self-election of a role as described in any of the above embodiments.

An embodiment of the present invention further provides a computer-readable storage medium storing an information processing program thereon, and when the information processing program is executed by the processor, causes the processor to carry out the method for self-election of a role as described in any of the above embodiments.

By means of the technical scheme according to some embodiments of the present invention, manual intervention can be reduced, and the networking and installation capability of multi-AP networks can be improved. It shall be understood by a person having ordinary skills in the art that all or some of the steps, functional modules/units in the methods, systems and devices disclosed above can be implemented as software, firmware, hardware and their appropriate combinations. In the hardware implementation, the division between functional modules/units mentioned in the above description does not necessarily correspond to the division of physical components. For example, a physical component can have multiple functions; or, a function or step can be performed by several physical components in cooperation. Some or all of the components can be implemented as software executable by a processor, such as a digital signal processor or a microprocessor, or as hardware, or as an integrated circuit, such as an application specific integrated circuit. Such software may be distributed on computer-readable medium, which may include computer storage medium (or non-transitory medium) and communication medium (or transitory medium). As is well known to a person having ordinary skills in the art, the term computer storage medium includes volatile and nonvolatile, removable and non-removable medium implemented in any method or technology for storing information such as computer readable instructions, data structures, program modules or other data. Computer storage medium include, but are not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be used to store desired information and accessible by a computer. Furthermore, it is well known to a person having ordinary skills in the art that communication medium usually contains computer-readable instructions, data structures, program modules or other data in modulated data signals such as carrier waves or other transmission mechanisms, and can include any information delivery medium.

## Claims

1. A method for self-election of a role, performed in a multi-access point, AP, network, comprising,
transmitting an AP automatic configuration search message, by an AP in the multi-AP network, after the AP is initiated (201); and
configuring a role of the AP as an agent, by the AP, in response to a response message for the AP automatic configuration search message being received by the AP within a predetermined period (202),
wherein the AP automatic configuration search message comprises an AP autoconfig search message in 1905 protocol, and the AP autoconfig search message is a layer 2 multicast message,
**characterized in that**, the method further comprises,
configuring a role of the AP as a controller, by the AP, in response to the response message for the AP automatic configuration search message being not received by the AP within the predetermined period (303).

2. The method of claim 1, further comprising,
in response to the response message for the AP automatic configuration search message being not received by the AP within the predetermined period and before configuring a role of the AP as a controller, repeating the step of transmitting (603) the AP automatic configuration search message, by the AP, for no more than a predetermined number of times, until:
- either receiving the response message for the AP automatic configuration search message by the AP within the predetermined period (303) following any of the transmissions of the AP automatic configuration search message, and configuring (604) the role of the AP as an agent, by the AP, in response to the response message for the AP automatic configuration search message being received by the AP,
- or, else, configuring a role of the AP as a controller, by the AP, in response to the response message for the AP automatic configuration search message being not received by the AP within the predetermined period (303) following any of the transmissions of the AP automatic configuration search message, after the transmission of the AP automatic configuration search message being repeated for the predetermined number of times.

3. The method of claim 2, further comprising,
performing a determination as to whether or not a device directly connected with a Wide Area Network, WAN, port of the AP is a 1905 device, by the AP, in response to the response message being not received by the AP for the AP automatic configuration search message having been transmitted repeatedly for the predetermined number of times (605);
and configuring the role of the AP as the agent, by the AP, in response to a determination that the device directly connected to the WAN port of the AP is the 1905 device (606).

4. The method of claim 3, further comprising,
configuring the role of the AP as a controller, by the AP, in response to a determination that the device directly connected to the WAN port of the AP is not the 1905 device (607).

5. The method of claim 3, wherein performing a determination as to whether or not the device directly connected with the WAN port of the AP is the 1905 device, by the AP, comprises,
performing a determination as to whether or not a topology discovery message is received via the WAN port of the AP, by the AP;
performing a further determination as to whether or not the device directly connected to the WAN port of the AP is the 1905 device, by the AP, in response to a determination that the topology discovery message is received via the WAN port of the AP; and
determining that the device directly connected to the WAN port of the AP is not the 1905 device, in response to a determination that, the topology discovery message is not received via the WAN port of the AP.

6. The method of claim 1, wherein subsequent to configuring the role of the AP as the agent by the AP, the method further comprises,
performing a Wi-Fi Simple Configuration, WSC, interaction with a controller device in the multi-AP network, and performing a wireless configuration synchronization, by the AP.

7. A device for self-election of a role, deployed in an access point, AP, in a multi-AP network, comprising a memory (81), a processor (82), and a computer program stored in the memory (81) and executable by the processor (82) which, when the computer program is executed by the processor (82), causes the AP to carry out the method for self-election of a role of any one of claims 1 to 6.

8. A computer-readable storage medium storing an information processing program, which when executed by a processor associated with an access point, AP, in a multi-AP network, causes the AP to carry out the method for self-election of a role of any one of claims 1 to 6.

## Patentansprüche

1. Ein Verfahren zur Selbstwahl einer Rolle, durchgeführt in einem Multi-Zugangspunkt (AP)-Netzwerk, umfassend:
Senden einer AP-Automatik-Konfigurations-Suchnachricht durch einen AP im Multi-AP-Netzwerk, nachdem der AP initialisiert wurde (201); und
Konfigurieren einer Rolle des AP als Agent durch den AP, in Reaktion darauf, dass eine Antwortnachricht auf die AP-Automatik-Konfigurations-Suchnachricht innerhalb eines vorbestimmten Zeitraums durch den AP empfangen wird (202),
wobei die AP-Automatik-Konfigurations-Suchnachricht eine AP-Autokonfig-Suchnachricht nach 1905-Protokoll umfasst und die AP-Autokonfig-Suchnachricht eine Layer-2-Multicast-Nachricht ist,
**dadurch gekennzeichnet, dass** das Verfahren ferner umfasst:
Konfigurieren einer Rolle des AP als einen Controller durch den AP, in Reaktion darauf, dass die Antwortnachricht auf die AP-Automatik-Konfigurations-Suchnachricht nicht innerhalb des vorbestimmten Zeitraums durch den AP empfangen wird (303).

2. Das Verfahren nach Anspruch 1, ferner umfassend:
in Reaktion darauf, dass die Antwortnachricht auf die AP-Automatik-Konfigurations-Suchnachricht nicht innerhalb des vorbestimmten Zeitraums durch den AP empfangen wird und vor dem Konfigurieren einer Rolle des AP als einen Controller, Wiederholen des Schritts des Sendens (603) der AP-Automatik-Konfigurations-Suchnachricht durch den AP für nicht mehr als eine vorbestimmte Anzahl von Malen, bis:
entweder Empfangen der Antwortnachricht auf die AP-Automatik-Konfigurations-Suchnachricht durch den AP innerhalb des vorbestimmten Zeitraums (303) nach einem der Sendevorgänge der AP-Automatik-Konfigurations-Suchnachricht, und Konfigurieren (604) der Rolle des AP als ein Agent durch den AP in Reaktion darauf, dass die Antwortnachricht auf die AP-Automatik-Konfigurations-Suchnachricht durch den AP empfangen wird,
oder andernfalls Konfigurieren der Rolle des AP als einen Controller durch den AP, in Reaktion darauf, dass die Antwortnachricht auf die AP-Automatik-Konfigurations-Suchnachricht nicht innerhalb des vorbestimmten Zeitraums (303) nach allen Sendevorgängen der AP-Automatik-Konfigurations-Suchnachricht durch den AP empfangen wird, nachdem das Senden der AP-Automatik-Konfigurations-Suchnachricht die vorbestimmte Anzahl von Malen wiederholt wurde.

3. Das Verfahren nach Anspruch 2, ferner umfassend:
Durchführen einer Bestimmung, ob ein mit einem Wide Area Network (WAN)-Port des AP direkt verbundenes Gerät ein 1905-Gerät ist oder nicht, durch den AP, in Reaktion darauf, dass die Antwortnachricht auf die AP-Automatik-Konfigurations-Suchnachricht nach dem wiederholten Senden für die vorbestimmte Anzahl von Malen nicht empfangen wurde (605);
und Konfigurieren der Rolle des AP als den Agenten durch den AP, in Reaktion auf eine Bestimmung, dass das mit dem WAN-Port des AP direkt verbundene Gerät das 1905-Gerät ist (606).

4. Das Verfahren nach Anspruch 3, ferner umfassend:
Konfigurieren der Rolle des AP als einen Controller durch den AP, in Reaktion auf eine Bestimmung, dass das mit dem WAN-Port des AP direkt verbundene Gerät nicht das 1905-Gerät ist (607)d.

5. Das Verfahren nach Anspruch 3, wobei das Durchführen einer Bestimmung, ob das mit dem WAN-Port des AP direkt verbundene Gerät ein 1905-Gerät ist oder nicht, durch den AP, umfasst:
Durchführen einer Bestimmung, ob eine Topologie-Entdeckungsnachricht über den WAN-Port des AP empfangen wird oder nicht, durch den AP;
Durchführen einer weiteren Bestimmung, ob das mit dem WAN-Port des AP direkt verbundene Gerät ein 1905-Gerät ist oder nicht, durch den AP, in Reaktion auf eine Bestimmung, dass die Topologie-Entdeckungsnachricht über den WAN-Port des AP empfangen wird; und
Bestimmen, dass das mit dem WAN-Port des AP direkt verbundene Gerät nicht das 1905-Gerät ist, in Reaktion auf eine Bestimmung, dass die Topologie-Entdeckungsnachricht nicht über den WAN-Port des AP empfangen wird.

6. Das Verfahren nach Anspruch 1, wobei nach Konfigurieren der Rolle des AP als den Agenten durch den AP das Verfahren ferner umfasst:
Durchführen einer Wi-Fi-Einfach-Konfigurations (WSC)-Interaktion mit einem Controller-Gerät in dem Multi-AP-Netzwerk und Durchführen einer drahtlosen Konfigurationssynchronisierung durch den AP.

7. Eine Vorrichtung zur Selbstwahl einer Rolle, eingesetzt in einem Zugangspunkt (AP) in einem Multi-AP-Netzwerk, umfassend einen Speicher (81), einen Prozessor (82) und ein Computerprogramm, das im Speicher (81) gespeichert ist und durch den Prozessor (82) ausführbar ist, wobei das Computerprogramm, wenn es durch den Prozessor (82) ausgeführt wird, den AP veranlasst, das Verfahren zur Selbstwahl einer Rolle nach einem der Ansprüche 1 bis 6 auszuführen.

8. Ein computerlesbares Speichermedium, das ein Informationsverarbeitungsprogramm speichert, das, wenn es durch einen Prozessor eines Zugangspunkts (AP) in einem Multi-AP-Netzwerk ausgeführt wird, den AP veranlasst, das Verfahren zur Selbstwahl einer Rolle nach einem der Ansprüche 1 bis 6 auszuführen.

## Revendications

1. Procédé d'auto-désignation pour un rôle, réalisé dans un réseau à points d'accès, AP, multiples, comportant
l'émission d'un message de recherche de configuration automatique d'AP, par un AP dans le réseau multi-AP, après que l'AP a été amorcé (201) ; et
la configuration, par l'AP, d'un rôle de l'AP en tant qu'agent en réaction à la réception par l'AP d'un message de réponse au message de recherche de configuration automatique d'AP au cours d'une période prédéterminée (202),
le message de recherche de configuration automatique d'AP comportant un message de recherche d'auto-configuration d'AP sous protocole 1905, et le message de recherche d'auto-configuration d'AP étant un message de multidiffusion de couche 2,
**caractérisé en ce que** le procédé comporte en outre
la configuration, par l'AP, d'un rôle de l'AP en tant que contrôleur en réaction au fait que le message de réponse au message de recherche de configuration automatique d'AP ne soit pas reçu par l'AP au cours de la période prédéterminée (303).

2. Procédé selon la revendication 1, comportant en outre,
en réaction au fait que le message de réponse au message de recherche de configuration automatique d'AP ne soit pas reçu par l'AP au cours de la période prédéterminée et avant de configurer un rôle de l'AP en tant que contrôleur, la répétition, par l'AP, de l'étape d'émission (603) du message de recherche de configuration automatique d'AP, pas plus d'un nombre prédéterminé de fois, jusqu'à :
- soit la réception par l'AP du message de réponse au message de recherche de configuration automatique d'AP au cours de la période prédéterminée (303) à la suite de l'une quelconque des émissions du message de recherche de configuration automatique d'AP, et la configuration (604), par l'AP, du rôle de l'AP en tant qu'agent en réaction à la réception par l'AP du message de réponse au message de recherche de configuration automatique d'AP,
- soit, si ce n'est pas le cas, la configuration, par l'AP, d'un rôle de l'AP en tant que contrôleur en réaction au fait que le message de réponse au message de recherche de configuration automatique d'AP ne soit pas reçu par l'AP au cours de la période prédéterminée (303) à la suite de l'une quelconque des émissions du message de recherche de configuration automatique d'AP, après que l'émission du message de recherche de configuration automatique d'AP a été répétée le nombre prédéterminé de fois.

3. Procédé selon la revendication 2, comportant en outre,
la réalisation, par l'AP, d'une détermination selon laquelle un dispositif directement connecté à un port de réseau étendu, WAN, de l'AP est ou non un dispositif 1905 en réaction au fait que le message de réponse ne soit pas reçu par l'AP pour le message de recherche de configuration automatique d'AP qui a été émis de façon répétée le nombre prédéterminé de fois (605) ;
et la configuration, par l'AP, du rôle de l'AP en tant qu'agent en réaction à une détermination du fait que le dispositif directement connecté au port WAN de l'AP est le dispositif 1905 (606).

4. Procédé selon la revendication 3, comportant en outre,
la configuration, par l'AP, du rôle de l'AP en tant que contrôleur en réaction à une détermination du fait que le dispositif directement connecté au port WAN de l'AP n'est pas le dispositif 1905 (607).

5. Procédé selon la revendication 3, la réalisation, par l'AP, d'une détermination selon laquelle le dispositif directement connecté au port WAN de l'AP est ou non le dispositif 1905 comportant
la réalisation, par l'AP, d'une détermination selon laquelle un message de découverte de topologie est reçu via le port WAN de l'AP ou non ;
la réalisation, par l'AP, d'une autre détermination selon laquelle le dispositif directement connecté au port WAN de l'AP est ou non le dispositif 1905, en réaction à une détermination du fait que le message de découverte de topologie est reçu via le port WAN de l'AP ; et
la détermination du fait que le dispositif directement connecté au port WAN de l'AP n'est pas le dispositif 1905, en réaction à une détermination du fait que le message de découverte de topologie n'est pas reçu via le port WAN de l'AP.

6. Procédé selon la revendication 1, le procédé comportant en outre, à la suite de la configuration par l'AP du rôle de l'AP en tant qu'agent,
la réalisation d'une interaction de configuration simple de Wi-Fi, WSC, avec un dispositif contrôleur dans le réseau multi-AP, et la réalisation, par l'AP, d'une synchronisation de configuration sans fil.

7. Dispositif d'auto-désignation pour un rôle, déployé dans un point d'accès, AP, dans un réseau multi-AP, comportant une mémoire (81), un processeur (82), et un programme informatique conservé dans la mémoire (81) et exécutable par le processeur (82) qui, lorsque le programme informatique est exécuté par le processeur (82), amène l'AP à réaliser le procédé d'auto-désignation pour un rôle selon l'une quelconque des revendications 1 à 6.

8. Support de stockage lisible par ordinateur conservant un programme de traitement d'informations qui, lorsqu'il est exécuté par un processeur associé à un point d'accès, AP, dans un réseau multi-AP, amène l'AP à réaliser le procédé d'auto-désignation pour un rôle selon l'une quelconque des revendications 1 à 6.
